# EUROPÄISCHE PATENTSCHRIFT

(11) **EP 2 934 879 B1**
(45) Veröffentlichungstag und Bekanntmachung des Hinweises auf die Patenterteilung: **14.09.2016**
(21) Anmeldenummer: 13815721.9
(22) Anmeldetag: 18.12.2013
(51) Int. Cl.: B32B 7/12, B32B 15/08, B32B 15/14, B32B 15/18, B32B 15/20

(54) **HALBZEUG FÜR HYBRID-BAUTEILE, HYBRID-BAUTEIL UND VERFAHREN ZUR HERSTELLUNG EINES HALBZEUGS**
SEMI-FINISHED COMPONENT FOR HYBRID STRUCTURAL MODULE, HYBRID STRUCTURAL MODULE AND METHOD FOR PRODUCING A SEMIFINISHED COMPONENT.
COMPOSANT SEMI-FINI POUR MODULE STRUCTUREL HYBRIDE, MODULE STRUCTUREL HYBRIDE ET PROCÉDÉ DE FABRICATION D'UN COMPOSANT SEMI-FINI.

(30) Priorität: 20.12.2012 DE 102012112821
(43) Veröffentlichungstag der Anmeldung: 28.10.2015
(73) Patentinhaber: ThyssenKrupp Steel Europe AG, 47166 Duisburg (DE)
(72) Erfinder: GRÜNEKLEE, Axel, 47249 Duisburg (DE); MAYER, Stefan, 58239 Schwerte (DE); ROGNER, Ingo, 85049 Ingolstadt (DE); KLÜPPEL, Ingo, 44791 Bochum (DE); PATBERG, Lothar, 47445 Moers (DE)
(74) Vertreter: ThyssenKrupp Intellectual Property GmbH
(86) Internationale Anmeldenummer: PCT/EP2013/077183
(87) Internationale Veröffentlichungsnummer: WO 2014/096062

(56) Entgegenhaltungen:
- EP-A1- 0 938 969
- DE-A1- 4 434 217
- DE-A1- 10 022 075
- DE-A1-102010 038 470
- DE-A1-102011 004 801
- JP-A- 2007 211 224
- US-B2- 7 482 040

## Beschreibung

Die vorliegende Erfindung betrifft ein Halbzeug aus Metall, ein Hybrid-Bauteil hergestellt zumindest aus einem erfindungsgemäßen Halbzeug und einem kohlenstofffaserverstärkten Kunststoff und ein Verfahren zur Herstellung eines erfindungsgemäßen Halbzeugs.

Im Bereich des Fahrzeugrohbaus hat sich zur Verbindung unterschiedlicher Komponenten aus Metall in den letzten Jahrzehnten insbesondere das Widerstandsschweißen als sowohl kostengünstiges als auch schnelles Verfahren zur Verbindung einzelner Komponenten durchgesetzt. Beim Widerstandsschweißen wird die elektrische Leitfähigkeit der zu verbindenden Komponenten ausgenutzt, indem ein elektrischer Strom durch die Verbindungsstelle geleitet wird und dadurch die Komponenten aufgrund des Jouleschen Wärmestroms bis zum Aufschmelzen erhitzt werden. Dadurch entsteht auf kostengünstige und schnelle Art und Weise eine stoffschlüssige Verbindung.

Um die Erwartungen und Anforderungen beispielsweise bezüglich eines geringen Kraftstoffverbrauchs zu erfüllen, wurde zunehmend auf Werkstoffe wie Kunststoff ausgewichen, um das Gewicht einzelner Komponenten oder Bauteile zu reduzieren.

Problematisch ist hierbei, dass der Kunststoff in der Regel nicht elektrisch leitend ist und somit nicht für etablierte Verfahren wie das Widerstandsschweißen geeignet ist. Die Kunststoffbauteile können somit nicht mittels Widerstandsschweißen mit anderen Kunststoffbauteilen oder Metallbauteilen verbunden werden. Auch kommen nach heutigem Stand der Technik keine Lötverfahren in Betracht. Dadurch ist ein Fügen von zwei oder mehreren Kunststoffbauteilen nicht ohne Einschränkungen und/oder ohne Mehraufwand zu realisieren.

Bauteile können als reine Kunststoffbauteile ausgestaltet werden, welche dann beispielsweise mit Klebstoff in eine Metallstruktur eingefügt werden. Dabei kann dann allerdings ebenfalls nicht auf etablierte Verfahren wie das Widerstandsschweißen zurückgegriffen werden. Als Resultat wäre eine entsprechend aufwendige Umgestaltung bzw. Anpassung des Herstellungsverfahrens notwendig.

Aus dem Stand der Technik der JP-A 60 083 785 ist alternativ bekannt, in eine Harzkomponente ein elektrisch schweißbares Metallbauteil einzufügen. Die Harzkomponente wird dann mithilfe des darin eingefügten Metallbauteils an ein Stahlpaneel punktgeschweißt. Da dass Metallbauteil aber in das Harz eingefügt werden muss, ergeben sich zusätzliche Herstellungsschritte und Einschränkungen für die Bauteilherstellung.

Eine weitere Alternative, Kunststoff in Konstruktionen, insbesondere fahrzeugtechnischer Art, einzufügen, stellen Hybrid-Bauteile dar. Zur Gewichtsreduzierung haben in den letzten Jahren zunehmend diese Hybrid-Bauteile bzw. Mischbaulösungen, insbesondere Kunststoff-Metall-Hybridkonzepte, in den Karosseriebau Einzug erhalten.

Dabei können als Kunststoff insbesondere kohlenstofffaserverstärkte Kunststoffe, "CFK" abgekürzt, umgangssprachlich häufig auch nur "Carbon" genannt, eingesetzt werden, welche gerade im Fahrzeugbau eine immer größere Bedeutung spielen. Bei kohlenstofffaserverstärkten Kunststoffen sind Kohlenstofffasern in eine Kunststoffmatrix eingebettet. Die kohlenstofffaserverstärkten Kunststoffe haben den Vorteil, dass die Festigkeit und Steifigkeit des Kunststoffs erheblich gesteigert werden kann und sie dadurch insbesondere für den Einsatz im Karosseriebau geeignet sind.

Problematisch ist hierbei allerdings, dass einzelne Kohlenstofffasern aus der Kunststoffmatrix mit dem im Hybrid-Bauteil verwendeten Metall in Kontakt treten können und bei zusätzlichem Vorhandensein eines Elektrolyts eine Kontaktkorrosion zur Zerstörung des Bauteils im Verbindungsbereich von Metall und kohlenstofffaserverstärktem Kunststoff führen kann. Insbesondere bei Karosseriebauteilen wird durch die Kombination von Feuchtigkeit und Auftausalz bzw. durch salziges Spritzwasser, welches als Elektrolyt fungiert, die Gefahr der Korrosion erhöht.

Dieser Effekt rührt daher, dass unter Einwirkung eines Elektrolyts das Metall als Anode und der Kohlenstoff des kohlenstofffaserverstärkten Kunststoffs als Kathode fungiert und dann eine elektrochemische Reaktion einsetzen kann, welche zu einer Auflösung des Metalls führt. Diese elektrochemische Reaktion ist beispielsweise aus dem Leclanché-Element oder der Zink-Braunstein-Zelle bekannt. Der Effekt wird dadurch noch verstärkt, dass aus Korrosionsschutzgründen als Metall häufig ein mit einer Zinkschicht versehener Stahl eingesetzt wird. Aufgrund der elektrochemischen Spannungsreihe von Zink mit einem Normalpotenzial von -0,76 V zu Kohlenstoff mit einem Normalpotenzial von +0,74 V ergibt sich eine Spannung von 1,5 V, welche zu einer raschen Auflösung des Zinks führen kann.

Grundsätzlich ist es denkbar, beispielsweise durch die Wahl des Metalls diesen Effekt zu beeinflussen und zu minimieren.

Wird allerdings als mit den Kohlenstofffasern in Verbindung stehendes Metall des Hybrid-Bauteils beispielsweise Aluminium mit einem Normalpotential von -1,66 V oder Magnesium mit einem Normalpotenzial von -2,38 V gewählt, wird dieser Effekt aufgrund der hohen Potenzialdifferenz zum Kohlenstoff von 2,40 V bzw. 3,12 V allerdings nicht reduziert, sondern tritt sogar noch in weit stärkerer Weise auf. Entsprechendes ergibt sich für typische Beschichtungen wie FAL, welche aus 10 % Silizium und 90 % Aluminium besteht, da Aluminium wie aufgeführt eine noch stärkere Neigung zur Korrosion bei dem Kontakt mit Kohlenstoff aufweisen würde. Entsprechendes gilt beispielsweise auch für eine Zink-Magnesium-Beschichtung. Alternativ ist auch der Einsatz eines unverzinkten Stahl Blechs mit dem Hauptlegierungsbestandteil Eisen mit einem Normalpotenzial von -0,44 V denkbar. Hierbei würde die Spannung auf 1,18 V und damit auch die Korrosionsgeschwindigkeit reduziert werden. Problematisch ist hierbei allerdings, dass dann direkt der Grundwerkstoff angegriffen wird, was wiederum zu einer beträchtlichen Beschädigung des Bauteils führt.

Es ist ersichtlich, dass durch den Einsatz von konventionellen Metallen bzw. Beschichtungssystemen die Problematik der Kontaktkorrosion also nicht zufriedenstellend gelöst werden kann.

Alternativ ist daher denkbar, abweichend von konventionellen Beschichtungssystemen sehr edle Metalle wie beispielsweise Silber mit einem Normalpotenzial von +0,8 V oder Gold mit einem Normalpotenzial von +1,42 V einzusetzen. Hierbei ist allerdings problematisch, dass diese Metalle verhältnismäßig teuer sind und ihr Einsatz somit in der Regel bereits aus wirtschaftlicher Sicht nicht in Betracht kommt.

Vor diesem Hintergrund liegt der vorliegenden Erfindung die Aufgabe zugrunde, ein Hybrid-Bauteil mit verbesserten Korrosionsschutzeigenschaften anzugeben.

Diese Aufgabe wird durch ein Hybrid-Bauteil mit den Merkmalen des Patentanspruches 1 gelöst.

Gemäß der Lehre der Erfindung wird die oben genannte Aufgabe gelöst durch ein Halbzeug aus Metall mit zumindest einem ersten Bereich mit einer Korrosionsschutzschicht aus einer organischen, schweißgeeigneten Beschichtung, die ganzflächig oder partiell aufgetragen ist, wobei die organische Beschichtung elektrisch leitende Pigmente und eine Dicke von 0,5 bis 5 µm oder mit haftvermittelnder Wirkung eine Dicke von 5µm bis 7 µm aufweist, wobei das Normalpotential der Pigmente größer -0,5 V ist, und einem kohlenstofffaserverstärktem Kunststoff, wobei der kohlenstofffaserverstärkte Kunststoff mit dem Halbzeug im ersten Bereich des Halbzeugs verbunden ist.

Auf diese Weise kann ein Halbzeug zur Herstellung von Hybrid-Bauteilen bereitgestellt werden, wobei die daraus hergestellten Hybrid-Bauteile verbesserte Korrosionsschutzeigenschaften aufweisen. In Verbindung mit kohlenstofffaserverstärkten Kunststoffen wirkt die organische Beschichtung bei den erfindungsgemäßen Dicken der organischen Beschichtung wie eine Isolierschicht oder galvanische Trennung. Dadurch entsteht zwischen den Kohlenstofffasern des Kunststoffs und dem Metall des Halbzeugs in Verbindung mit einem Elektrolyt keine oder nur eine sehr verringerte Kontaktkorrosion im Vergleich zu einem System in den die Kohlenstofffasern des Kunststoffs direkt mit dem Metall des Halbzeugs in Berührung kommen. Durch die organische Beschichtung wird die elektrochemische Spannungsreihe nämlich im Wesentlichen unterbrochen oder die Potenzialdifferenz zumindest reduziert. Im Ergebnis können so länger haltbare und zuverlässigere Hybrid-Bauteile zur Verfügung gestellt werden.

Unter einer Korrosionsschutzschicht wird insbesondere auch ein Korrosionsschutzprimer verstanden.

Das Halbzeug gemäß der Erfindung kann insbesondere ein Band, ein zu einem Coil gewickeltes Band, eine Tafel oder ein Blech sein.

Die organische Schicht ist bevorzugt eine einzelne organische Schicht, kann aber auch mehrere organische Schichten umfassen. Maßgeblich ist, dass durch die organische Schicht eine elektrochemische Spannungsreihe vom Kohlenstoff eines kohlenstofffaserverstärkten Kunststoffs zum Metall des Halbzeugs ausreichend reduziert werden kann.

Vorteilhaft in Bezug auf das Auftragen einer organischen Schicht, welche ausreichende Isolationseigenschaften bei gleichzeitiger Ermöglichung einer Schweißeignung aufweist, hat sich eine organische Beschichtung erwiesen, welche insbesondere Acrylpolymere, beispielsweise in einer wässrigen Lösung, komplexe Fluoride, organische Säuren und/oder Mineralsäuren aufweist.

Vorzugsweise besteht die Korrosionsschutzschicht des ersten Bereichs aus einer organischen, schweißgeeigneten Beschichtung. Schweißgeeignet bedeutet hierbei, dass bei den erfindungsgemäßen Dicken der organischen Beschichtung die isolierende und somit vor Korrosion schützende Wirkung erzielt wird, aber gleichzeitig die Schweißbarkeit des darunter liegenden Metalls beispielsweise zu einem anderen Metall weiterhin gegeben ist. Insbesondere ist das Widerstandsschweißen des Halbzeugs bzw. des daraus hergestellten Formteils beispielsweise mit einer Punktschweißzange durch einen entsprechenden Anpressdruck der Elektronen weiterhin möglich. Die Schweißeignung der Beschichtung ist insbesondere bei einer vollflächigen Beschichtung des Halbzeugs vorteilhaft, also wenn sich der erste Bereich über die gesamte Oberfläche einer oder beider Seiten des Halbzeugs erstreckt. Dabei können die Kanten des Halbzeugs unbeschichtet bleiben oder ebenfalls beschichtet werden.

Alternativ kann die Schweißeignung des Halbzeugs aber grundsätzlich auch dadurch erreicht werden, dass sich der erste Bereich mit der Korrosionsschutzschicht aus einer organischen Beschichtung nicht über das gesamte Halbzeug erstreckt. In diesem Fall kann dann eine ausreichende Schweißeignung des Halbzeugs in dem außerhalb des ersten Bereichs gebildeten zweiten Bereich bereitgestellt werden. Der erste Bereich kann sich also beispielsweise teilweise auf einer oder beiden Seiten des Halbzeugs befinden, aber auch eine oder beide Seiten komplett abdecken. Ebenfalls kann der erste Bereich auch aus nicht zusammenhängenden Teilbereichen gebildet werden.

Vorzugsweise ist die den ersten Bereich bildende organische Beschichtung zumindest oder ausschließlich in dem Bereich aufgetragen, in dem ein Kontakt des Halbzeugs oder des aus dem Halbzeug hergestellten Formteils mit einem kohlenstofffaserverstärkten Kunststoff vorgesehen ist.

Besteht das Halbzeug gemäß einer Ausgestaltung des erfindungsgemäßen Hybrid-Bauteils aus Stahl, Aluminium, einer Aluminium-Legierung, Magnesium und/oder einer Magnesium-Legierung, können diese Metalle trotz ihrer Normalpotenziale, welche vom Normalpotenzial des Kohlenstoffs teilweise stark abweichen, zur Herstellung von Halbzeugen für Hybrid-Bauteile verwendet werden. So weist Aluminium beispielsweise ein Normalpotenzial von -1,66 V, Magnesium von -2,38 V und Eisen von -0,44 V auf. Das Halbzeug besteht bevorzugt aus verzinktem Stahl. Zink hat ein Normalpotenzial von -0,76 V. Es ist möglich, dass das Halbzeug nur im ersten Bereich unter der organischen Beschichtung verzinkt ist, nur in anderen Bereichen verzinkt ist oder vollständig verzinkt ist. Die Verzinkung kann beispielsweise durch Feuerverzinken, durch eine galvanische Verzinkung in einem Zinkelektrolyt, oder durch ein Galvaneal-Verfahren realisiert werden. Im Galvaneal-Verfahren wird das Halbzeug nach einem Feuerverzinken zusätzlich geglüht.

Gemäß einer weiteren Ausgestaltung des Hybrid-Bauteils ist die organische Beschichtung direkt auf dem Halbzeug aufgebracht oder eine zusätzliche organische und/oder anorganische Korrosionsschutzschicht unter der organischen Beschichtung vorgesehen. Ist die organische Beschichtung direkt auf dem Halbzeug aufgebracht, kann das Halbzeug wirtschaftlich bereitgestellt werden, da auf die zusätzliche Korrosionsschutzschicht im ersten Bereich verzichtet wird. Vorzugsweise wird allerdings eine zusätzliche Korrosionsschicht, welche bevorzugt anorganisch ist, unter der organischen Beschichtung vorgesehen. Dadurch kann das Herstellungsverfahren vereinfacht werden, da beispielsweise das ganze Halbzeug verzinkt werden kann, ohne zwischen bestimmten Bereichen differenzieren zu müssen. Unter der organischen Schicht kann insbesondere auch eine durch ein Galvaneal-Verfahren hergestellte Schicht als zusätzliche Korrosionsschutzschicht vorgesehen sein.

Bevorzugte elektrisch leitende Pigmente sind insbesondere Aluminium, Magnesium, Zink, eine Zink-Legierung, Edelstahl, Eisenpulver, metallbedampfte Glaskugeln, metallbedampft Glashohlkugeln, Wolfram und/oder Eisenphosphat aufweisende Pigmente. Es wird dadurch eine bessere Schweißeignung des ersten Bereichs mit der organischen Beschichtung erzielt. Die Bereiche zwischen den Pigmenten wirken dabei isolierend und verhindern die Bildung eines Lokalelements Metall/Kohlenstoff. Gleichzeitig verringert das Vorsehen solcher Pigmente in gewissem Maße den Korrosionsschutz. Insofern kann über die Konzentration der Pigmente die Schweißeignung bzw. der Korrosionsschutz der organischen Beschichtung eingestellt werden. Es ist natürlich auch möglich, nur Teilbereiche mit Pigmenten zu versehen. So kann in den mit den Pigmenten versehenen Bereichen die Schweißeignung erhöht werden, während in den pigmentarmen oder -freien Bereichen eine verbesserte Isolation zu kohlenstofffaserverstärkten Kunststoffen erzielt wird.

Dabei hat Edelstahl mit der Werkzeugnummer 1.4301 (X5CrNi18-10) ein Normalpotenzial von etwa +0,6 V bis +0,9 V, Eisenpulver -0,44 V und Wolfram -0,12 V. Eisenphosphat (Fe2P, beispielsweise Ferrophos) ist nicht löslich und hat daher kein Normalpotenzial.

Besonders bevorzugt sind Wolfram aufweisende Pigmente, da so die Schweißbarkeit verbessert werden kann, im Wesentlichen ohne eine negative Beeinflussung der Korrosionsschutzschicht hervorzurufen, da sich lediglich eine Potenzialdifferenz von Wolfram zu Kohlenstoff von 0,86 V ergibt.

Die Pigmente aufweisende organische Beschichtung hat vorzugsweise eine Schichtdicke von 3 bis 5 µm.

Gemäß einer weiteren Ausgestaltung weisen die Pigmente eine mittlere Teilchengröße auf, welche größer als die Dicke der organischen Beschichtung ist. Dadurch kann ein besonders positiver Einfluss der Pigmente auf die Schweißbarkeit bzw. Schweißeignung sichergestellt werden, da die organische Schicht durch die Pigmente lokal überbrückt wird. Die mittlere Teilchengröße ist somit insbesondere größer als 0,5 bis 10 µm und vorzugsweise größer als 1 bis 5 µm, wobei der tatsächliche Mindestwert für die mittlere Teilchengröße der Pigmente dann von der gewählten Schichtdicke in diesen Bereichen abhängt.

Bevorzugt ist das Normalpotential der Pigmente größer -0,2 V. Da das Normalpotenzial von Metall normalerweise niedriger ist als das Normalpotenzial von Kohlenstoff (+0,74 V), ergibt sich hieraus, dass der Betrag der Potenzialdifferenz zwischen den Pigmenten und dem Kohlenstoff des kohlenstofffaserverstärkten Kunststoffs kleiner als 1,24 V, vorzugsweise kleiner als 0,94 V ist. Durch die geringe Potenzialdifferenz bleibt der Korrosionsschutz der organischen Beschichtung weitestgehend erhalten, während gleichzeitig aufgrund der Pigmente eine verbesserte Schweißbarkeit erzielt werden kann.

Zusätzlich zum Vorsehen von Pigmenten in der organischen Beschichtung des ersten Bereichs kann gemäß einer weiteren Ausgestaltung des Hybrid-Bauteils die organische Beschichtung eine haftvermittelnde Wirkung aufweisen. Dadurch kann eine Verbesserung der Haftung des Halbzeugs bzw. des aus dem Halbzeug hergestellten Formteils mit dem kohlenstofffaserverstärkten Kunststoff erzielt werden. Auch hier kann mit ausreichendem Anpressdruck mit einer Punktschweißzange das Halbzeug bzw. die daraus hergestellten Formteile trotz der organischen Beschichtung verschweißt werden. Alternativ kann eine partielle Lackierung des Halbzeugs in nur dem Bereich vorgesehen sein, in dem ein Fügen an ein kohlenstofffaserverstärktes Kunststoffteil vorgesehen ist.

Die organische Beschichtung mit der haftvermittelnden Wirkung ist bevorzugt 5 bis 7 µm dick, insbesondere 6 µm. Die organische Schicht mit der haftvermittelnden Wirkung kann beispielsweise Copolyamide aufweisen.

Ist die organische Beschichtung mit haftvermittelnder Wirkung ein Pulverlack, kann ebenfalls eine ausreichende Korrosionsschutzwirkung im ersten Bereich erzielt werden. Die Bereiche, die später verschweißt werden sollen, können beim Applizieren des Pulverlacks beispielsweise durch eine Maskierung freigehalten werden. Alternativ kann der Pulverlack auch mechanisch wieder entfernt werden, oder direkt nur in dem Bereich appliziert werden, welcher später einen Fügebereich zwischen Kunststoff und Metall darstellt. Der Pulverlack kann als Thermoplast, Thermoset oder Hotmelt ausgebildet sein.

Gemäß einer weiteren Ausgestaltung des erfindungsgemäßen Hybrid-Bauteils weist das Halbzeug zumindest einen von der organischen Beschichtung des ersten Bereichs freien, zweiten Bereich auf. Durch diese lediglich partielle Beschichtung mit der Korrosionsschutzschicht aus der organischen Beschichtung des ersten Bereichs wird ein positiver Effekt auf die Wirtschaftlichkeit erzielt, da ein geringerer Materialverbrauch für die organische Schicht erreicht wird. Dass der zweite Bereich frei von der organischen Beschichtung des ersten Bereichs ist, heißt nicht, dass der zweite Bereich keine Beschichtung aufweisen kann. Vielmehr kann auch im zweiten Bereich eine beliebige Beschichtung vorgesehen sein, beispielsweise eine organische oder anorganische. Die Beschichtung des zweiten Bereichs kann auch eine der bereits beschriebenen Beschichtungen des ersten Bereichs sein, welche sich aber von der tatsächlich gewählten Beschichtung des ersten Bereichs unterscheidet.

Beispielsweise kann der zweite Bereich eine anorganische Schicht in Form einer Verzinkung aufweisen oder aber eine organische Schicht mit Schweißpartikeln. Der erste Bereich zeichnet sich somit durch seine gegenüber dem zweiten Bereich verbesserte Isolation aus, während sich der zweite Bereich gegenüber dem ersten Bereich durch seine verbesserte Schweißbarkeit auszeichnet. Im Hybrid-Bauteil wird der erste Bereich dann in Kontakt mit dem Kohlenstoff Faser verstärkten Kunststoffen stehen, während im zweiten Bereich, welcher als Flanschbereich ausgestaltet sein kann, beispielsweise ein Widerstandspunktschweißen mit einem weiteren Bauteil erfolgen kann. Im ersten Bereich ist dann ein Schutz gegen die Kontaktkorrosion mit den Kohlenstofffasern des Kunststoffs gegeben, während im zweiten Bereich gleichzeitig ein Schutz gegen die übliche Korrosion durch Kontakt mit der Umgebung gegeben ist.

Wie zu erkennen ist, kann auf diese Weise eine flexible Anpassung des Halbzeugs an die vorgesehene Struktur des herzustellenden Hybrid-Bauteils, welches sich durch verbesserte Korrosionseigenschaften und eine gute Schweißbarkeit auszeichnet, erzielt werden.

Wie der erste Bereich muss auch der zweite Bereich kein zusammenhängendes Gebiet sein sondern kann auch aus einzelnen Teilbereichen bestehen.

Ebenfalls können auch weitere beschichtete oder unbeschichtete Bereiche, beispielsweise ein dritter und ein vierter Bereich, vorgesehen sein.

Es ist besonders bevorzugt, wenn der zweite Bereich eine verzinkte, insbesondere feuerverzinkte oder galvanisch verzinkte, Beschichtung aufweist. Da der zweite Bereich des Halbzeugs bzw. des daraus hergestellten Formteils nicht für den Kontakt mit kohlenstofffaserverstärktem Kunststoff vorgesehen ist, ist eine Verzinkung zum Korrosionsschutz ausreichend, während gleichzeitig beispielsweise für das Widerstandsschweißen oder das Laserstrahlschweißen eine gute Schweißbarkeit in diesem zweiten Bereich gewährleistet ist.

Gemäß einer weiteren Ausgestaltung des erfindungsgemäßen Hybrid-Bauteils ist die organische Beschichtung des ersten Bereichs ganzflächig oder partiell im Coil-Coating Verfahren aufgetragen. Hierdurch können homogene und sehr dünne Schichten der aus der organischen Beschichtung bestehenden Korrosionsschutzschicht des ersten Bereichs aufgetragen werden. Zudem stellt das Coil-Coating-Verfahren ein besonders wirtschaftliches Beschichtungsverfahren dar. Unter einer ganzflächigen Beschichtung ist eine einseitige oder beidseitige ganzflächige Beschichtung zu verstehen. Die Kanten des Halbzeugs können dabei unbeschichtet bleiben oder beschichtet werden. Soll das Halbzeug auf einer oder beiden Seiten nur partiell beschichtete werden, ist die Beschichtung mit einer ausgeschnittenen Walze, welche nur eine Teilbeschichtung durchführt, bevorzugt. Optional und in Abhängigkeit der Beschichtung kann auch die Beschichtung des zweiten Bereichs durch Coil-Coating aufgetragen werden. Ist das Halbzeug im zweiten Bereich verzinkt, wird diese Verzinkung allerdings bevorzugt durch Tauchbäder realisiert, beispielsweise durch Feuerverzinken oder galvanisches Verzinken.

Gemäß der Lehre der vorliegenden Erfindung wird die Aufgabe durch ein Hybrid-Bauteil hergestellt zumindest aus einem erfindungsgemäßen Halbzeug und einem kohlenstofffaserverstärkten Kunststoff gelöst, wobei der kohlenstofffaserverstärkte Kunststoff mit dem Halbzeug im ersten Bereich des Halbzeugs verbunden ist. Durch die organische Beschichtung im ersten Bereich wird die Kontaktkorrosion mit dem in der Kunststoffmatrix eingebetteten Kohlenstoff vermindert bzw. ausgeschlossen. Bevorzugt ist der kohlenstofffaserverstärkte Kunststoff mit dem Halbzeug ausschließlich im ersten Bereich des Halbzeugs verbunden, um das Auftreten von Lokalelementen von Metall zu Kohlenstoff weitestgehend auszuschließen. Im Ergebnis kann ein gewichtsreduziertes Halbzeug mit hoher Stabilität bereitgestellt werden, welches auch mit bewährten Technologien wie Widerstandsschweißen, Widerstandspunktschweißen und/oder Laserstrahlschweißen kompatibel ist. Das Hybrid-Bauteil weist gleichzeitig eine erhöhte Resistenz gegen Korrosion und somit eine längere Haltbarkeit auf.

Als kohlenstofffaserverstärkter Kunststoff können in der Regel alle gängigen kohlenstofffaserverstärkten Kunststoffe vorgesehen sein. Die Verbindung zwischen dem kohlenstofffaserverstärkten Kunststoff und dem ersten Bereich kann über eine thermoplastische oder duroplastische Matrix erreicht werden.

Um die Schnittkanten des Hybrid-Bauteils zu schützen, kann auf diese eine organische, insbesondere mittels UV-Strahlung aushärtbare Beschichtung, beispielsweise in Form eines Lacks, aufgetragen werden. Es ist jedoch auch vorstellbar, an den Schnittkanten zunächst eine anorganische, beispielsweise metallische, Beschichtung vorzusehen, die anschließend mit einer organischen Schicht beschichtet wird.

Gemäß einer Ausgestaltung des erfindungsgemäßen Hybrid-Bauteils ist das Hybrid-Bauteil eine Komponente der Karosserie eines Kraftfahrzeugs, insbesondere ein Tunnel, ein Seitenaufprallträger, eine A-, B-, C- oder D-Säule oder ein Dachträger. Insbesondere bei Kraftfahrzeugen ist durch Umwelteinflüsse wie Salzwasser, welches als Elektrolyt fungieren kann, eine erhöhte Gefahr einer Kontaktkorrosion zwischen Metall und kohlenstofffaserverstärktem Kunststoff gegeben. Durch die Verwendung eines erfindungsgemäßen Hybrid-Bauteils für die Komponenten einer Kraftfahrzeugskarosserie wird diese Gefahr vermieden oder zumindest verringert, ohne auf die Schweißbarkeit der Hybrid-Bauteile verzichten zu müssen.

Gemäß einer weiteren Lehre der vorliegenden Erfindung wird die Aufgabe durch ein Verfahren zur Herstellung eines Halbzeugs aus Metall mit zumindest einem ersten Bereich mit einer Korrosionsschutzschicht aus einer organischen, insbesondere schweißgeeigneten, Beschichtung gelöst, wobei die organische Beschichtung mit einer Dicke von 0,5 bis 5 µm, insbesondere von 1 bis 5 µm, aufgetragen wird. Durch das erfindungsgemäße Verfahren kann ein Halbzeug bereitgestellt werden, welches keine oder verminderte Kontaktkorrosion mit kohlenstofffaserverstärktem Kunststoff aufweist, und trotzdem herkömmlich geschweißt werden kann. Es hat sich herausgestellt, dass durch die Wahl der Schichtdicke eine ausreichende Isolationsschicht und somit Korrosionsschutzschicht bereitgestellt werden kann.

Gleichzeitig kann entweder im Bereich der Beschichtung selbst und/oder in nicht oder anders beschichteten Bereichen eine Schweißeignung für herkömmliche Schweißmethoden, wie Widerstandspunktschweißen erreicht werden.

Insbesondere kann das erfindungsgemäße Verfahren derart angepasst werden, dass die beschriebenen erfindungsgemäßen Halbzeuge hergestellt werden können.

Gemäß einer Ausgestaltung des erfindungsgemäßen Verfahrens wird die den ersten Bereich bildende organische Beschichtung in dem Bereich aufgetragen, in dem ein Kontakt des Halbzeugs mit einem kohlenstofffaserverstärkten Kunststoff vorgesehen ist. Vorzugsweise wird die organische Beschichtung des ersten Bereichs ausschließlich in dem Bereich aufgetragen, in dem ein Kontakt des Halbzeugs oder des daraus hergestellten Formteils mit einem kohlenstofffaserverstärkten Kunststoff vorgesehen ist. So kann eine optimale Anpassung des hergestellten Halbzeugs an weitere Herstellungsschritte erfolgen.

Gemäß einer weiteren Ausgestaltung des erfindungsgemäßen Verfahrens wird die organische Beschichtung des ersten Bereichs im Coil-Coating-Verfahren aufgetragen, insbesondere mit einer ausgeschnittenen Beschichtungswalze. Mit dem Coil-Coating-Verfahren wird kostengünstig eine sehr homogene und dünne Schichtdicke erreicht. Die organische Beschichtung des ersten Bereichs kann auch in mehreren Schritten erfolgen und/oder durch verschiedene Walzen appliziert werden. Auch kann die Beschichtung weiterer Bereiche durch ein Coil-Coating-Verfahren durchgeführt werden. Falls die organische Beschichtung des ersten Bereichs nicht ganzflächig auf eine oder beide Seiten des Halbzeugs aufgetragen werden soll, ist der Einsatz einer ausgeschnittenen Beschichtungswalze besonders vorteilhaft, um ein Halbzeug mit einer an folgende Verfahrensschritte angepassten Beschichtung herzustellen.

In weiteren Verfahrensschritten kann das so hergestellte Halbzeug dann beispielsweise zu einem Formteil geschnitten und/oder geformt werden und dann in den ersten Bereich mit einem kohlenstofffaserverstärkten Kunststoff verbunden werden. Die Verbindung erfolgt beispielsweise über eine thermoplastische oder duroplastische Matrix. Auf diese Weise wird dann ein Hybrid-Bauteil zur Verfügung gestellt, welches aufgrund der organischen Beschichtung des ersten Bereichs keine oder verminderte Korrosion, welche durch einen Metall-Kohlenstoff-Übergang erzeugt ist, aufweist. Gleichzeitig besitzt der erste Bereich oder alternativ ein zweiter Bereich eine Schweißeignung für herkömmliche Schweißverfahren, um das Hybrid-Bauteil anschließend mit weiteren Bauteilen zu verschweißen.

Es gibt nun eine Vielzahl von Möglichkeiten, das erfindungsgemäße Halbzeug, Hybrid-Bauteil sowie Verfahren auszugestalten und weiterzubilden. Hierzu wird einerseits verwiesen auf die den unabhängigen Patentansprüchen nachgeordneten Patentansprüche und andererseits auf die Beschreibung von Ausführungsbeispielen in Verbindung mit der Zeichnung. In der Zeichnung zeigt
- Fig. 1: eine perspektivische Ansicht eines Ausführungsbeispiels eines Halbzeugs zur Herstellung eines Hybrid-Bauteils in Form eines Bandes;
- Fig. 2a-d: Querschnittsansichten von verschiedenen Ausführungsbeispielen eines Halbzeugs zur Herstellung eines Hybrid-bauteils;
- Fig. 3: eine perspektivische Ansicht eines Ausführungsbeispiels eines erfindungsgemäßen Hybrid-Bauteils in Form eines Tunnels eines Kraftfahrzeugs;
- Fig. 4: eine schematische Darstellung eines Ausführungsbeispiels eines erfindungsgemäßen Verfahrens zur Herstellung eines Halbzeugs für ein Hybrid-Bauteil.

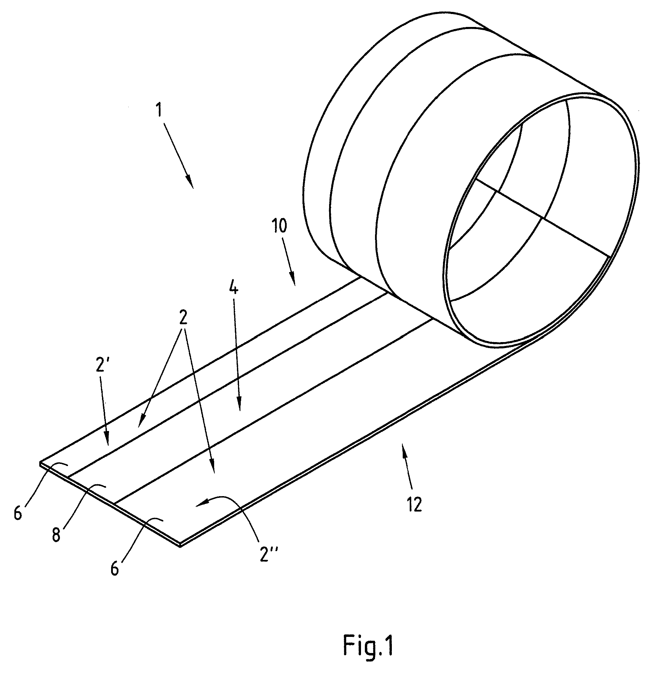

Fig. 1 zeigt eine perspektivische Ansicht eines Ausführungsbeispiels eines Halbzeugs 1 zur Herstellung eines Hybrid-Bauteils gemäß der vorliegenden Erfindung. Das Halbzeug 1 ist in diesem Ausführungsbeispiel in Form eines halb aufgewickelten Bandes ausgebildet. Allerdings können auch Tafeln oder Bleche vorgesehen sein. Das Halbzeug 1 ist aus Stahl hergestellt. Es können aber auch andere Metalle wie Aluminium, Aluminium-Legierungen, Magnesium oder Magnesium-Legierungen verwendet werden. Das Halbzeug 1 weist einen ersten Bereich 2 und einen zweiten Bereich 4 auf. Der erste Bereich 2 besteht aus einem Teilbereich 2' und einem etwas breiteren Teilbereich 2". Der zweite Bereich 4 besteht hingegen aus einem zusammenhängenden Bereich. Es können allerdings auch andere Aufteilungen des ersten und des zweiten Bereichs vorgesehen sein. Der erste Bereich 2 und der zweite Bereich 4 unterscheiden sich durch die Beschichtungen des Halbzeugs 1. Es können auch noch weitere Bereiche, beispielsweise ein dritter und ein vierter Bereich, mit weiteren Beschichtungen vorgesehen sein.

Der erste Bereich 2 weist eine Korrosionsschutzschicht bzw. einen Korrosionsschutzprimer aus einer organischen Beschichtung 6 auf, während der zweite Bereich 4 eine Beschichtungen 8 in Form einer verzinkten Oberfläche aufweist. Die organische Beschichtung 6 kann 0,5 bis 5 µm dick sein. Die organische Beschichtung 6 ist dabei auf einer zwischen dem Stahl des Halbzeugs 1 und der organischen Beschichtung 6 anorganischen Beschichtung angeordnet, welche vorzugsweise ebenfalls eine durch eine Verzinkung realisierte Beschichtung ist. Die organische Beschichtung 6 kann alternativ auch direkt auf dem Stahl des Halbzeugs 1 aufgebracht sein.

Die beschriebene Beschichtung der Oberseite 10 des Halbzeugs 1 kann beispielsweise spiegelsymmetrisch auch auf der Unterseite 12 des Halbzeugs 1 appliziert werden. Allerdings kann das Halbzeug 1 auch nur einseitig beschichtet sein oder auf der Unterseite eine abweichende Beschichtung vorgesehen sein.

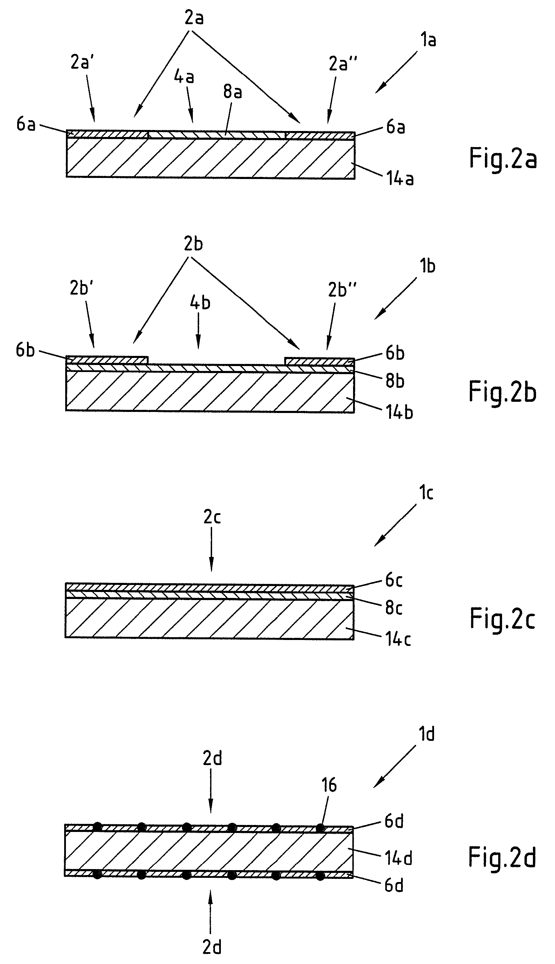

In den Fig. 2a-d sind Querschnittsansichten von verschiedenen Ausführungsbeispielen Halbzeuge zur Herstellung eines Hybrid-Bauteils dargestellt.

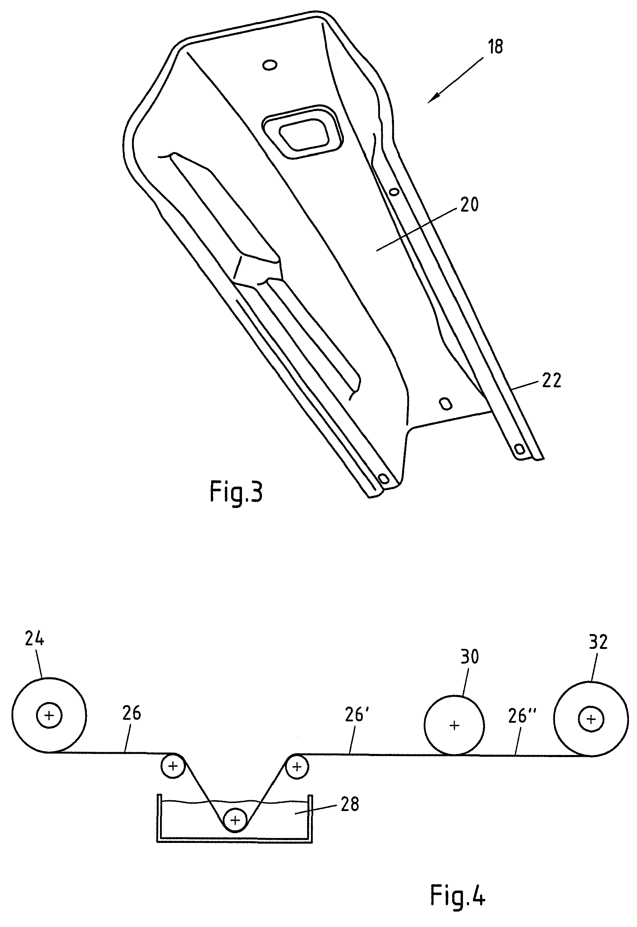

Fig. 2a zeigt einen Querschnitt durch ein Halbzeug 1a. Direkt auf dem Metall 14a ist in dem ersten Bereich 2 mit den Teilbereichen 2a', 2a'' eine Korrosionsschutzschicht aus einer organischen Beschichtung 6a vorgesehen. In dem zweiten Bereich 4a ist unmittelbar auf dem Metall 14a zur Verzinkung eine Zinkschicht 8a vorgesehen. In dem ersten Bereich 2a ist durch die organische Beschichtung 6a ein effektiver Schutz gegen die Ausbildung von Lokalelementen zwischen dem Metall 14a und Kohlenstoff, beispielsweise aus einem kohlenstofffaserverstärktem Kunststoff 20 (vgl. Fig. 3), gegeben. Um gleichzeitig die Schweißbarkeit des Halbzeugs 1a zu erhalten, ist der zweite Bereich 4a frei von der organischen Beschichtung 6a. Stattdessen weist der zweite Bereich 4a die Zinkschicht 8a auf. In diesem zweiten Bereich 4a kann später problemlos eine Anbindung von weiteren Bauteilen beispielsweise mittels Widerstandsschweißen oder Laserstrahlschweißen erfolgen. Die Unterseite des Halbzeugs 1a ist in diesem Beispiel unbeschichtet.

Fig. 2b zeigt ein weiteres Ausführungsbeispiel eines Halbzeugs 1b, welches ähnlich dem aus Fig. 2a aufgebaut ist. Im Unterschied zu dem Halbzeug 1a weist das Halbzeug 1b allerdings eine einseitige, ganzflächige Zinkschicht 8b auf. Im Ergebnis weist das Halbzeug 1b in dem zweiten Bereich 4b also eine Verzinkung auf, während in dem ersten Bereich 2b das Halbzeug 1b zusätzlich zu der organischen Beschichtung 6b durch die Verzinkung 8b eine darunter liegende zusätzliche Korrosionsschicht aufweist. Die in den zwei Teilbereiche 2b' und 2b" vorgesehene organische Beschichtung 6b wird vorteilhafter Weise mit einer ausgeschnittenen Beschichtungswalze (nicht dargestellt) aufgetragen.

Fig. 2c zeigt ein weiteres Ausführungsbeispiel eines Halbzeugs 1c, welches ähnlich dem aus Fig. 2b aufgebaut ist. Im Unterschied zu dem Halbzeug 1b weist das Halbzeug 1c allerdings eine einseitige, ganzflächige organische Beschichtung 6c auf. Durch die ganzflächige organische Beschichtung 6c wird erreicht, dass die gesamte Oberfläche der Oberseite des Halbzeugs 1c vor Kontaktkorrosion aufgrund von Kohlenstofffasern eines kohlenstofffaserverstärkten Kunststoffs geschützt ist. Aufgrund der Eigenschaften der organischen Beschichtung 6c, insbesondere ihrer Dünne, ist die organische Beschichtung 6c schweißgeeignet. Mit ausreichendem Anpressdruck einer Punktschweißzange kann das Halbzeug 1c beispielsweise weiterhin trotz der organischen Beschichtung 6c verschweißt werden. Gleichzeitig kann aufgrund der ganzflächigen Beschichtung 6c eine Verbindung mit einem kohlenstofffaserverstärkten Kunststoff räumlich flexibel an dem Halbzeug 1c oder an einem aus dem Halbzeug 1c hergestellten Formteil vorgesehen werden.

In Fig. 2d ist ein weiteres Ausführungsbeispiel eines Halbzeugs 1d im Querschnitt gezeigt. Im Unterschied zu den vorherigen Halbzeugen 1a, 1b und 1c beweist das Halbzeug 1d einen ersten Bereich 2d mit einer beidseitigen, ganzflächigen organischen Beschichtung 6d auf. Die organische Beschichtung 6d ist unmittelbar auf dem Metall 14d appliziert. In der organischen Beschichtung 6d sind elektrisch leitende Pigmente 16 enthalten, deren mittlerer Durchmesser größer als die Schichtdicke der organischen Beschichtung 6d ist. Der Verringerung der Schweißeignung durch die isolierende organische Beschichtung 6d wird durch das Vorsehen der elektrisch leitenden Pigmente 16 entgegengewirkt. In diesem Ausführungsbeispiel sind die Pigmente 16 im Wesentlichen gleichmäßig in der organischen Beschichtung 6d verteilt. Es ist allerdings auch möglich lokal unterschiedliche Konzentrationen der Pigmente 16 vorzusehen um die Isolationswirkung bzw. die Schweißeignung lokal einzustellen. Fig. 3 zeigt eine perspektivische Ansicht eines Ausführungsbeispiels eines erfindungsgemäßen Hybrid-Bauteils 18 in Form eines Tunnels eines Kraftfahrzeugs. Das Hybrid-Bauteil 18 besteht aus einem kohlenstofffaserverstärkten Kunststoff 20 und einem Formteil 22, welches aus einem erfindungsgemäßen Halbzeug hergestellt ist. Zur Herstellung dieses Hybrid-Bauteils 18 wurde ein Streifen 22 aus einem erfindungsgemäßen Halbzeug in eine Form gelegt, eine Matte 20 aus kohlenstofffaserverstärktem Kunststoff eingebracht und diese mit einer thermoplastischen oder duroplastischen Matrix über den ersten, die organische Beschichtung 6, 6a, 6b, 6c, 6d aufweisenden Bereich des Formteils 22 miteinander verbunden.

Bei dem in Fig. 3 dargestellten Hybrid-Bauteil 18 ist der Randbereich des Hybrid-Bauteils 18 aus dem Formteil 22, also aus Metall, realisiert, um als Flanschbereich und als Fügepartner für angrenzende Bauteile wie beispielsweise eine Stirnwand und oder Bodenbleche (nicht dargestellt) zur Verfügung zu stehen. Dabei können dann bewährte Fügetechnologien wie Widerstandspunktschweißen oder Laserstrahlschweißen eingesetzt werden und trotz des Einsatzes eines modernen Werkstoffes wie kohlenstofffaserverstärkter Kunststoff kann ein konventioneller Rohbau betrieben werden. Gleichzeitig wird durch den Einsatz von kohlenstofffaserverstärktem Kunststoff eine Gewichtsreduzierung ermöglicht und trotzdem kann die gewünschte Stabilität des crash- und festigkeitsbeanspruchten Hybrid-Bauteils 18 erreicht werden. Dies gilt auch für andere Komponenten der Karosserie eines Kraftfahrzeugs, insbesondere Seitenaufprallträger, A-, B-, C- oder D-Säulen oder Dachträger.

Fig. 4 zeigt eine schematische Darstellung eines Ausführungsbeispiels eines erfindungsgemäßen Verfahrens zur Herstellung eines Halbzeugs 26''. Ein bereits in Bandform auf einem Coil 24 aufgewickeltes Halbzeug 26 wird von dem Coil 24 abgewickelt und im Tauchbad 28 verzinkt. Anschließend wird das verzinkte Halbzeug 26' einem Coil-Coating-Verfahren unterzogen, in dem mittels der Beschichtungswalze 30 eine organische Beschichtung mit einer Dicke von 0,5 bis 10 µm aufgetragen wird. Das Halbzeug 26" wird anschließend wieder zu einem Coil 32 aufgerollt.

Die organische Beschichtung wird zumindest in dem Bereich aufgetragen, in dem ein Kontakt des Halbzeugs 26" bzw. des daraus hergestellten Formteils mit einem kohlenstofffaserverstärktem Kunststoff vorgesehen ist. In dem übrigen Bereich braucht die organische Beschichtung nicht vorgesehen zu werden, was insbesondere mittels einer ausgeschnittenen Beschichtungswalze realisiert werden kann.

## Patentansprüche

1. Hybrid-Bauteil hergestellt zumindest aus einem Halbzeug aus Metall mit zumindest einem ersten Bereich (2, 2a, 2b, 2c, 2d) mit einer Korrosionsschutzschicht aus einer organischen, schweißgeeigneten Beschichtung (6, 6a, 6b, 6c, 6d), die ganzflächig oder partiell aufgetragen ist, wobei die organische Beschichtung (6, 6a, 6b, 6c, 6d) elektrisch leitende Pigmente (16) zur Verbesserung der Schweißeigenschaften und eine Dicke von 0,5 bis 5 µm oder mit haftvermittelnder Wirkung eine Dicke von 5µm bis 7 µm aufweist, wobei das Normalpotential der Pigmente (16) größer -0,5 V ist, und einem kohlenstofffaserverstärktem Kunststoff, wobei der kohlenstofffaserverstärkte Kunststoff (20) mit dem Halbzeug (1, 1a, 1b, 1c, 1d, 26") im ersten Bereich (2, 2a, 2b, 2c, 2d) des Halbzeugs (1, 1a, 1b, 1c, 1d, 26") verbunden ist.

2. Hybrid-Bauteil nach Anspruch 1,
**dadurch gekennzeichnet, dass**
das Hybrid-Bauteil (18) eine Komponente der Karosserie eines Kraftfahrzeugs ist, insbesondere ein Tunnel, ein Seitenaufprallträger, eine A-, B-, C- oder D-Säule oder ein Dachträger.

3. Hybrid-Bauteil nach einem der Ansprüche 1 oder 2,
**dadurch gekennzeichnet, dass**
die organische Beschichtung (6, 6a, 6b, 6c, 6d) direkt auf dem Halbzeug (1, 1a, 1b, 1c, 1d, 26") aufgebracht ist oder eine zusätzliche organische und/oder anorganische Korrosionsschutzschicht (8b, 8c) unter der organischen Beschichtung (6, 6a, 6b, 6c, 6d) vorgesehen ist.

4. Hybrid-Bauteil nach einem der Ansprüche 1 bis 3,
**dadurch gekennzeichnet, dass**
die Pigmente (16) eine mittlere Teilchengröße aufweisen, welche größer als die Dicke der organischen Beschichtung (6, 6a, 6b, 6c, 6d) ist.

5. Hybrid-Bauteil nach einem der Ansprüche 1 bis 4,
**dadurch gekennzeichnet, dass**
das Normalpotential der Pigmente (16) größer -0,2 V, ist.

6. Hybrid-Bauteil nach einem der Ansprüche 1 bis 5,
**dadurch gekennzeichnet, dass**
die organische Beschichtung (2, 2a, 2b, 2c, 2d) eine haftvermittelnde Wirkung aufweist.

7. Hybrid-Bauteil nach Anspruch 6,
**dadurch gekennzeichnet, dass**
die organische Beschichtung (6, 6a, 6b, 6c, 6d) mit haftvermittelnder Wirkung ein Pulverlack ist.

8. Hybrid-Bauteil nach einem der Ansprüche 1 bis 7,
**dadurch gekennzeichnet, dass**
das Halbzeug (1, 1a, 1b, 1c, 1d, 26") zumindest einen von der organischen Beschichtung (6, 6a, 6b, 6c, 6d) des ersten Bereichs (2, 2a, 2b, 2c, 2d) freien, zweiten Bereich (4, 4a, 4b) aufweist.

9. Hybrid-Bauteil nach Anspruch 8,
**dadurch gekennzeichnet, dass**
der zweite Bereich (4, 4a, 4b) eine verzinkte, insbesondere feuerverzinkte oder galvanisch verzinkte, Beschichtung (8, 8a, 8b) aufweist.

## Claims

1. Hybrid component produced at least from a semifinished product made of metal having at least a first region (2, 2a, 2b, 2c, 2d) with a corrosion-resistant layer made of an organic coating (6, 6a, 6b, 6c, 6d) which is suitable for welding and is applied over the entire surface or partially, the organic coating (6, 6a, 6b, 6c, 6d) comprising electrically conductive pigments (16) for improving the welding properties and having a thickness of 0.5 to 5 µm or, with an adhesion-promoting effect, a thickness of 5 µm to 7 µm, the normal potential of the pigments (16) being greater than -0.5 V, and from a carbon fibre-reinforced plastic, the carbon fibre-reinforced plastic (20) being connected to the semifinished product (1, 1a, 1b, 1c, 1d, 26") in the first region (2, 2a, 2b, 2c, 2d) of the semifinished product (1, 1a, 1b, 1c, 1d, 26").

2. Hybrid component according to Claim 1,
**characterized in that**
the hybrid component (18) is a component of the body of a motor vehicle, in particular a tunnel, a side impact bar, an A, B, C or D pillar or a roof bar.

3. Hybrid component according to either of Claims 1 and 2,
**characterized in that**
the organic coating (6, 6a, 6b, 6c, 6d) is applied directly to the semifinished product (1, 1a, 1b, 1c, 1d, 26") or an additional organic and/or inorganic corrosion-resistant layer (8b, 8c) is provided beneath the organic coating (6, 6a, 6b, 6c, 6d).

4. Hybrid component according to one of Claims 1 to 3,
**characterized in that**
the pigments (16) have a mean particle size which is greater than the thickness of the organic coating (6, 6a, 6b, 6c, 6d).

5. Hybrid component according to one of Claims 1 to 4,
**characterized in that**
the normal potential of the pigments (16) is greater than -0.2 V.

6. Hybrid component according to one of Claims 1 to 5,
**characterized in that**
the organic coating (6, 6a, 6b, 6c, 6d) has an adhesion-promoting effect.

7. Hybrid component according to Claim 6,
**characterized in that**
the organic coating (6, 6a, 6b, 6c, 6d) with an adhesion-promoting effect is a powder lacquer.

8. Hybrid component according to one of Claims 1 to 7,
**characterized in that**
the semifinished product (1, 1a, 1b, 1c, 1d, 26") comprises at least a second region (4, 4a, 4b) free of the organic coating (6, 6a, 6b, 6c, 6d) of the first region (2, 2a, 2b, 2c, 2d).

9. Hybrid component according to Claim 8,
**characterized in that**
the second region (4, 4a, 4b) comprises a galvanized, in particular hot-dip galvanized or electrogalvanized, coating (8, 8a, 8b).

## Revendications

1. Composant hybride fabriqué au moins à partir d'un semi-produit en métal avec au moins une première région (2, 2a, 2b, 2c, 2d) avec une couche de protection contre la corrosion en un revêtement organique soudable (6, 6a, 6b, 6c, 6d), qui est déposé sur toute la surface ou partiellement, dans lequel le revêtement organique (6, 6a, 6b, 6c, 6d) présente des pigments électriquement conducteurs (16) pour améliorer les propriétés de soudage et une épaisseur de 0,5 à 5 µm ou avec un effet favorisant l'adhérence une épaisseur de 5 µm à 7 µm, dans lequel le potentiel normal des pigments (16) est supérieur à -0,5 V, et d'une matière plastique renforcée par des fibres de carbone, dans lequel la matière plastique renforcée par des fibres de carbone (20) est assemblée au semi-produit (1, 1a, 1b, 1c, 1d, 26") dans la première région (2, 2a, 2b, 2c, 2d) du semi-produit (1, 1a, 1b, 1c, 1d, 26").

2. Composant hybride selon la revendication 1, **caractérisé en ce que** le composant hybride (18) est un composant de la carrosserie d'un véhicule automobile, en particulier un tunnel, un amortisseur de choc latéral, une colonne A, B, C ou D ou une poutre de toit.

3. Composant hybride selon une des revendications 1 ou 2, **caractérisé en ce que** le revêtement organique (6, 6a, 6b, 6c, 6d) est déposé directement sur le semi-produit (1, 1a, 1b, 1c 1d, 26") ou il est prévu une couche organique et/ou inorganique supplémentaire de protection contre la corrosion (8b, 8c) en dessous du revêtement organique (6, 6a, 6b, 6c, 6d).

4. Composant hybride selon l'une quelconque des revendications 1 à 3, **caractérisé en ce que** les pigments (16) présentent une taille de particules moyenne, qui est supérieure à l'épaisseur du revêtement organique (6, 6a, 6b, 6c, 6d).

5. Composant hybride selon l'une quelconque des revendications 1 à 4, **caractérisé en ce que** le potentiel normal des pigments (16) est supérieur à -0,2 V.

6. Composant hybride selon l'une quelconque des revendications 1 à 5, **caractérisé en ce que** le revêtement organique (6, 6a, 6b, 6c, 6d) présente un effet favorisant l'adhérence.

7. Composant hybride selon la revendication 6, **caractérisé en ce que** le revêtement organique (6, 6a, 6b, 6c, 6d) présentant un effet favorisant l'adhérence est une laque en poudre.

8. Composant hybride selon l'une quelconque des revendications 1 à 7, **caractérisé en ce que** le semi-produit (1, 1a, 1b, 1c, 1d, 26") présente au moins une deuxième région (4, 4a, 4b) libre du revêtement organique (6, 6a, 6b, 6c, 6d) de la première région (2, 2a, 2b, 2c, 2d).

9. Composant hybride selon la revendication 8, **caractérisé en ce que** la deuxième région (4, 4a, 4b) présente un revêtement galvanisé, en particulier galvanisé par trempé ou par zingage galvanique (8, 8a, 8b).
